# EUROPEAN PATENT SPECIFICATION

(11) **EP 2 234 756 B1**
(45) Date of publication and mention of the grant of the patent: **15.06.2011**
(21) Application number: 08863592.5
(22) Date of filing: 22.12.2008
(51) Int. Cl.: B23Q 39/04, B23Q 7/02, B23Q 1/52

(54) **IMPROVED TRANSFER MACHINE AND WORKING PROCESS**
VERBESSERTE TRANSFERMASCHINE UND ARBEITSVERFAHREN
MACHINE DE TRANSFERT ET PROCÉDÉ DE TRAVAIL AMÉLIORÉS

(30) Priority: 24.12.2007 IT BS20070211
(43) Date of publication of application: 06.10.2010
(73) Proprietor: Buffoli Transfer S.p.a., 25128 Brescia (IT)
(72) Inventor: BUFFOLI, Edoardo, I-25128 Brescia (IT); BUFFOLI, Francesco, I-25128 Brescia (IT)
(74) Representative: Sangiacomo, Fulvia
(86) International application number: PCT/IT2008/000781
(87) International publication number: WO 2009/081443

(56) References cited:
- EP-A- 0 681 881
- EP-A- 1 752 255
- DE-A1- 3 837 279
- FR-A- 2 335 307

## Description

### Field of the Invention

This invention concerns in general multiple work position machine tools, and refers in particular to a transfer machine according to the preamble of claim 1, as for example known from EP-A-1 752 255 and to a process for mechanical machining of items on such transfer machine.

### State of the Technique

In the machining of items in series sector that require different mechanical machining operations, automatic machines with several sequential work positions are commonly used, such as transfer machines.

Every transfer machine basically comprises, in the range of a supporting frame, an item holder table turning intermittently on an axis and provided with gripping means, such as pliers or clamps, to hold each item during the machining process, and one or more operating units in a multitude of work positions envisaged in association with the item holder table. Each starting rough item can be prepared as an element on its own or achieved by cutting it in the shape of a billet from a continuous rod at the moment it is loaded in a respective clamp of the item holder table.

Once in the machine however, each item follows a set course, carried by the item holder table and transferred in succession to each of the work stations for the specific operations to be carried out in sequence according to the programmed cycle, starting from the load station up to the item download station.

When starting from a continuous rod, the work process normally envisages: an advancement of the rod corresponding to the length of the item required; blocking of a portion in a corresponding clamp of the item holder table from time to time in line with the loading position; the cutting of the rod just behind the blank to be separated; then the rotation of the item holder table towards the successive work stations for the operations to be carried out in sequence until the machined item has been completed and downloaded.

However, a problem with this customary procedure lies in the impossibility of achieving a complete machining of the item in all its parts, given that one of its portions is inserted and held by a clamp and therefore not accessible to any machining tools. Consequently, in order to be able to completely machine every item, also in the part which was initially not accessible, machining starts with the initial machining of the part emerging from the clamp, then the semi-machined part is re-positioned to reveal the part initially hidden and to be able to carry out the machining also on the latter part.

Having an item holder table provided with clamps, repositioning of each item can be carried out by axial manipulation inside the clamp itself. Having an item holder table provided with clamps, such repositioning is carried out by a manipulation that implies turning the item over so as to be able to position and clamp the part previously machined and as a result be able to access the part still to be machined. In the second case the clamps are assembled on the periphery of the item holder table and positioned to receive the item in two different positions.

### Objective and Summary of the Invention

Given the above premise, the objective of this invention is to propose an innovative transfer machine with a prearrangement of the item holder table and correlated operating units to carry out the work on each part of each item, working in parallel on two opposite fronts of the item holder table during two complete rotations of the latter.

This objective is reached, according to the invention, with a transfer machine according to the preamble of claim 1 and where, the item holder table has a first front face and a second front face at right angles to the rotation axis and facing in opposite directions; said first front face of the item holder table holds a first series of means of clamping the items facing towards the first operating units for the first machining operations to be carried out on each item, and said second front face of the item holder table holds a second series of clamping means of the items facing towards the second operating units for the second machining operations to be carried out on each item, and in one of said work stations is envisaged at least a manipulating device for picking up and transferring each item from one clamping means on the first front face to a clamping means on the second front face of the item holder table.

### Brief Description of the Drawings

The invention will however be described in greater detail in the continuation and made in reference to the enclosed diagrammatic drawings, in which:
Fig. 1 shows part of a transfer machine on a level with the item holder table;
Fig. 2 shows a view from the front in an axial direction of the item holder table according to arrow A in Fig. 1;

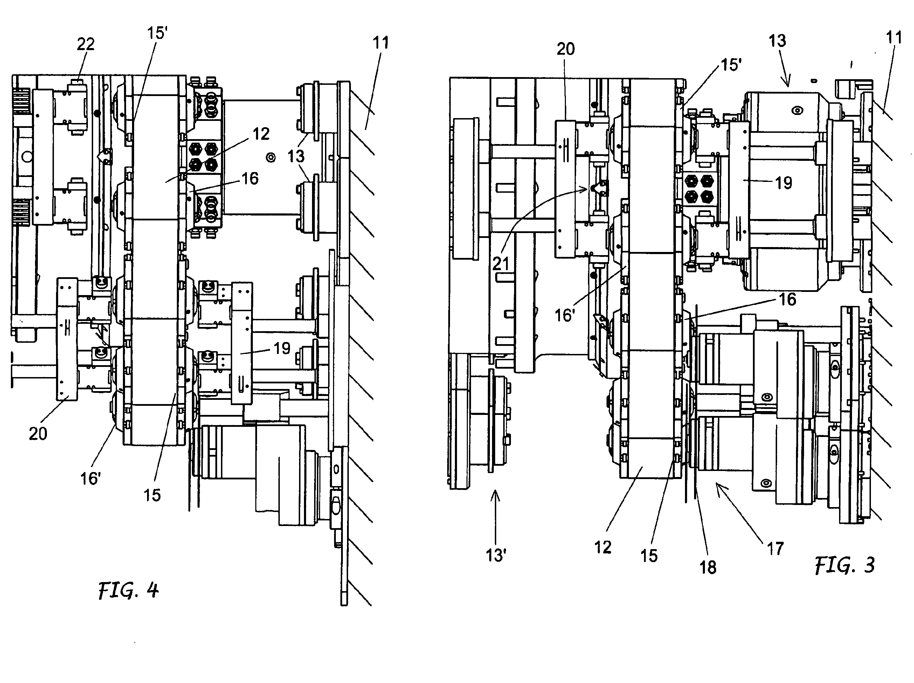

Fig. 3 shows a side view of the item holder table according to arrow B in Fig. 2; e
Fig. 4 shows a top view of the item holder table according to arrow C in Fig. 2.

### Detailed Description of the Invention

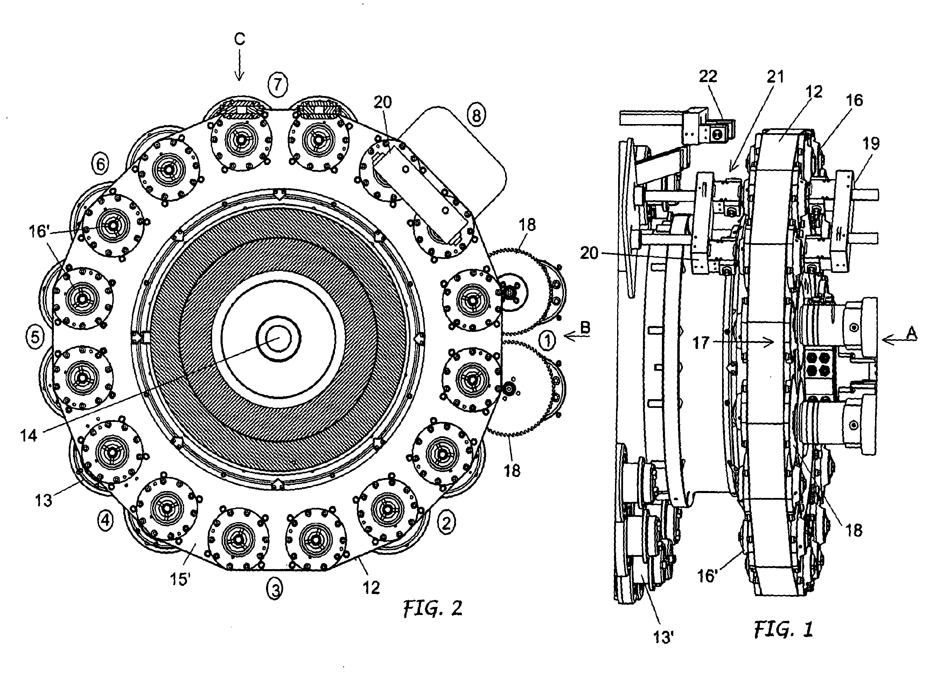

The transfer machine partially represented in said drawings includes a frame generically marked by the number 11, which holds an item holder table 12 and, in relation to the latter, a number of working units 13, 13' distributed and positioned according to requirements in several working positions which, for example, may be eight, at equal angular distances and numbered in sequence from 1 to 8 in Fig. 2.

The item holder table 12 is controlled and subject to intermittent rotations on an axis 14, which in the drawing is horizontal. It has a first front face 15 of intermittent rotations on an axis 14, which in the drawing is horizontal. It has a first front face 15 and a second front face 15', at right angles to the rotation axis and facing in opposite directions one from the other. More in detail , the item holder table 12 is equipped with first series of clamping means 16 on its first front face 15 and a second series of clamping means 16' on its second front face 15'.

Principally, all the clamping means 16, 16' are parallel to the rotation axis of the item holder table, and to the work position sequence on the side of the first front face 15 of the item holder table corresponding to as many work positions on the side of the second front face of said item holder table. However, all the clamping means 16, 16' on the two opposite faces 15, 15' of the item holder table are spaced angularly and similarly to the work positions 1 - 8 so as to be conducted in sequence and positioned in correspondence to each work position following the intermittent rotation of said item holder table 12.

Said clamping means can be in the form of hydraulically controlled grippers, and the clamping means 16 on a front face 15, even though facing in opposite directions, are preferably, but not necessarily, coaxial to the corresponding clamping means 16' on the other front face 15' of the item holder table 12.

The clamping means 16, that is the grippers of the first series, are facing towards some working units 13, whereas the clamping means 16', that is the grippers, of the second series are facing towards other working units 13' on board the frame 11 of the transfer machine.

Specifically, the machine described up to now has a load station 17 of the starting items, that coincides with the first work position 1 and which is placed on the first front face 15 of the item holder table 12. Each starting item can be prepared as an individual element or made up of a crop end blanked from time to time from a continuous rod directly into the machine. In this second case, in association with the item holder table 12 a feeder for the intermittent advance of a continuous rod is provided and equipped with a cutter 18, for example a circular type, to cut a length of the rod each time after the end of the latter has been blocked by a clamping means 16 placed in line with the load station.

Considering again the first face 15 of the item holder table, the working stations from 2 to 7 are equipped with working units 13 to carry out in succession the initial machining on the part of each item projecting from the relative clamping means 16. In line with the last station 8 on the side of the first front face of the item holder table is provided at least a manipulator device to transfer each item in succession from a first clamping means on the first face to a clamping means on the second face of the item holder table.

In the example illustrated a first transfer manipulator 19 transferring from the first front face 15 side associated and interacting with a second manipulator 20 on the opposite front face 15' of the item holder table, is provided.

Considering consequently the second face 15' of the item holder table, the station in line with the second manipulator 20 is to be regarded as the load station 21 of the items on that side of the item holder table and the work stations that follow are equipped with working units 13' to carry out in sequence the second machining process on the parts of each item projecting from relative clamping means 16', until the final download station is reached where a handling device 22 is provided with pick-up and downloader for each finished item.

The two transfer manipulators 19, 20 are subject to movements and are managed so that following the first machining carried out by the working units 13 on the part of the first face 15 of the item holder table, the first manipulator 19 picks up the semi-finished item from the clamping means 16 in line with it and transfers it to the second manipulator 20. In turn it receives the item from the first manipulator and places it in the clamping means in line with it on the opposite side of the item holder table.

It should be noted that the first manipulator will be suitable for picking up the item by its part already machined, leaving free its part still to be machined and up to that point held in respective clamping means, and that the second manipulator will be suitable to receive and pick up the item by its part still to be machined and to place it in the respective clamping means by the part previously machined, in this way leaving the part still to be machined exposed.

Evidently, the clamping means 16 on the first face of the item holder table are prepared to grip a part of the unprocessed initial item, whereas the clamping means 16' on the other side of the item holder table are set up to grip the machined part of the same item.

Practically the initial items are gripped in the clamping means on the first face of the item holder table and machined in turn, each on a given part during the first rotation of the item holder table with the first working units on one side of the latter and, after the transfer, by means of the manipulator or manipulators, to the clamping means on the second face of the item holder table to be machined, each on the remaining non-machined part during a second rotation of the item holder table followed by the unloading of them from the machine.

Finally, it should be noted that the clamping means on the item holder table can be set up individually so as to receive, carry and machine a single item at a time in each work position. Otherwise, as shown in the drawings and with the aim of doubling production, the clamping means on the item holder table can be paired so as to receive, carry and machine pairs of items in parallel in each work position. In this case the feeders in the load station of the items, the working units in each work position, the transfer manipulators and the final download manipulators will all have to be doubled.

## Claims

1. Transfer machine comprising a support frame (11), an item holder table (12) supported on said frame (11) and subject to intermittent rotations around an axis (14), a number of stationary work positions (1-8) in association with the item holder table (12) Sand each including at least one working unit (13, 13'), and a plurality of clamping means (16, 16') on board the item holder table (12) to hold and carry each item in sequence to be machined in each work position following the intermittent rotation of the item holder table (12) starting from a loading station (17) of the starting items up to a downloading station of the finished items, **characterized in that** said item holder table (12) has a first front face (15) and a second front face (15') at right angles to the rotation axis and facing in opposite directions, and **in that** said first front face (15) of the item holder table caries a first series of clamping means (16) of the items facing towards first working units (13) for first machining operation to be carried out on each item and that said second front face (15') of the item holder table carries a second series of clamping means (16') of the items facing towards second working units (13') for second machining operations to be carried out on each item , and **in that** in one of said work stations at least one manipulator device (19) is provided to pick up and transfer each item from at least a clamping means (16) on the first front face (15) to at least one clamping means (16') on the second front face (15') of the item holder table.

2. Transfer machine according to claim 1, wherein the clamping means (16, 16') on said front opposite faces are parallel to the rotating axis of the item holder table (12), with the clamping means (16) on one front face facing in opposite directions to those (16') of the other front face.

3. Transfer machine according to claims 1 and 2, wherein the clamping means (16) on a front face (15) are coaxial to the clamping means (16') on the other front face (15') of the item holder table (12), the clamping means being in the form of hydraulically powered pliers or clamps.

4. Transfer machine according to claims 1 and 2, wherein the clamping means (16) on a front face are staggered compared to the clamping means (16') on the other front face of the item holder table (12), the clamping means being in the form of hydraulically powered pliers or clamps.

5. Transfer machine according to any of the previous claims, where the items to be machined are cut from continuous rod, wherein the loading station (17) of the starting items is positioned close to the first front face (15) of the item holder table and coincides with a first work position, and wherein, in association with said loading station (17) a feeder is provided for intermittent advance of a continuous rod and with a shears to cut the continuous rod into lengths.

6. Transfer machine according to any of the previous claims, wherein the clamping means (16) on the first front face of the item holder table (12) are designed to receive and block a portion of each starting item during the initial machining operations of the remaining part of the length itself, and the clamping means (16') on the second front face of the item holder table (12) are designed to receive and block an already machined part of each item not machined previously.

7. Transfer machine according to any of the previous claims, wherein the at least one transfer manipulator device (19, 20) is designed and actuated, to take already machined part of each item.

8. Transfer machine according to any of the previous claims, wherein two opposite transfer manipulator devices (19, 20) are provided, one to take a machined part with each item and the other to take a non-machined function with each item.

9. Transfer machine according to any of the previous claims, wherein the clamping means (16, 16') on the item holder table (12) are single to receive, carry and work a single item at a time in each work position.

10. Transfer machine according to claims 1-3, wherein the clamping means (16, 16') on the item holder table (12) are paired so as to be able to receive, carry and work pairs of items in parallel in each work position, and wherein the feeders in the items load station (17), the working units in each work position, the transfer manipulator (19, 20) of the download manipulators are all double.

11. A process for multiple machining of items in a transfer machine having an intermittent item holder table (12) rotating on an axis, according to any of the previous claims, including the steps of:
feeding each starting item to the first clamping means (16) positioned on a first front face (15) of a item holder table (12),
carrying in turn each starting item in line with several working units to carry out first machining operations starting from a first to a last work stations during a first rotation of said item holder table (12);
releasing and mechanically transferring one at a time each semi-finished item from the clamping means (16) on said first front face (15) of the item holder table (12) in said final work station to corresponding clamping means (16') on a second front face (15') of the item holder table (12),
carrying each semi-finished item one at a time in line with other working units to carry out second machining operations during a second rotation of said item holder table (12) concomitant with the first machining operations carried out on the items in the first clamping means,
downloading the item after the second machining operations.

12. Process according to claim 11, in which every starting item is a pre-cut or pre-shaped element.

13. Process according to claim 11, in which every item is made up of a length sheared from a continuous rod directly in the machine in line with a feeder.

## Patentansprüche

1. Transfermaschine mit einer Trägerkonstruktion (11), einem Werkstückhalter-Tisch (12), der von oben genannter Konstruktion (11) gehalten wird und bei dem eine Intervallrotation um eine Achse (14) möglich ist, mehreren fixen Arbeitsstationen (1-8) in Verbindung mit dem Werkstückhalter-Tisch (12), wobei jede Station zumindest eine Bearbeitungseinheit (13, 13') aufweist, sowie verschiedenen Einspannvorrichtungen (16, 16') auf dem Werkstückhalter-Tisch (12), um jedes zu bearbeitende Werkstück festzuhalten und mit Hilfe der Intervallrotation des Werkstückhaltertisches (12) ausgehend von einem Beladeplatz (17) der Ausgangs-Werkstücke bis zum Entlade-Platz der fertigen Stücke weiterzugeben. **dadurch gekennzeichnet** der Werkstückhalter-Tisch (12) verfügt über eine erste Vorderfront (15) und eine zweite Vorderfront (15'), die orthogonal zur Rotationsachse und entgegengesetzt zueinander ausgerichtet sind, die erste Vorderfront (15) des Werkstückhalter-Tisches ist mit einer ersten Reihe von Einspannvorrichtungen (16) der Werkstücke für die ersten Bearbeitungseinheiten (13) und die erste Bearbeitung jedes Werkstücks versehen, die zweite Vorderfront (15') verfügt über eine zweite Reihe von Einspannvorrichtungen (16') der Werkstücke für die zweite Bearbeitung jedes Werkstücks und an einem der Arbeitsplätze ist zumindest eine Greifvorrichtung (19) vorgesehen, um jedes Werkstück zu ergreifen und von zumindest einer Einspannvorrichtung (16) an der ersten Vorderfront (15) zu zumindest einer Einspannvorrichtung (16') an der zweiten Vorderfront (15') des Werkstückhalter-Tisches zu führen.

2. Transfermaschine gemäß Anspruch 1, wobei der die Einspannvorrichtungen (16, 16') an den genannten entgegengesetzt liegenden Vorderfronten parallel zur Rotationsachse des Werkstückhalter-Tisches (12) sind, wobei die Einspannvorrichtungen (16) an einer Vorderfront entgegengesetzt zu denen (16') der anderen Vorderfront liegen.

3. Transfermaschine gemäß den Ansprüchen 1 und 2, wobei der die Einspannvorrichtungen (16) an einer Vorderfront (15) koaxial zu den Einspannvorrichtungen (16') an der anderen Vorderfront (15') des Werkstückhalter-Tisches (12) liegen, wobei die Einspannvorrichtungen die Form von hydraulisch betriebenen Zangen oder Spannbacken haben können.

4. Transfermaschine gemäß den Ansprüchen 1 und 2, wobei der die Einspannvorrichtungen (16) an einer Vorderfront versetzt zu den Einspannvorrichtungen (16') an der anderen Vorderfront des Werkstückhalter-Tisches (12) liegen, wobei die Einspannvorrichtungen die Form von hydraulisch betriebenen Zangen oder Spannbacken haben können.

5. Transfermaschine gemäß einem beliebigen der vorgenannten Ansprüche, wobei der die zu bearbeitenden Werkstücke durch eine durchgehende Stange zugeschnitten werden, wobei die Ladestation (17) der Ausgangs-Werkstücke an der Seite der ersten Vorderfront (15) des Werkstückhalter-Tisches angebracht ist und als erste Arbeitsstation dient. Gleichzeitig ist bei dieser Ladestation (17) ein Zuführer zum Intervallantrieb einer durchgehenden Stange mit einem Schneidegerät zum Schneiden in Stücke vorgesehen.

6. Transfermaschine gemäß einem beliebigen der vorgenannten Ansprüche, wobei der die Einspannvorrichtungen (16) an der ersten Vorderfront des Werkstückhalter-Tisches (12) so angelegt sind, dass sie einen Teil jedes Ausgangs-Werkstücks während der ersten Bearbeitung des restlichen Teils dieses Werkstücks aufnehmen und festhalten. Die Einspannvorrichtungen (16') an der zweiten Vorderfront des Werkstückhalter-Tisches (12) sind so angelegt, dass sie einen bereits bearbeiteten Teil jedes Werkstücks aufnehmen und festhalten, um den zuvor nicht bearbeiteten Teil zu bearbeiten.

7. Transfermaschine gemäß einem beliebigen der vorgenannten Ansprüche, wobei der zumindest ein Übergabegreifer (19, 20) so konzipiert ist und geführt wird, dass er einen bearbeiteten Teil jedes Werkstücks ergreift.

8. Transfermaschine gemäß einem beliebigen der vorgenannten Ansprüche, wobei der zwei entgegengesetzte Übergabegreifer (19, 20) vorgesehen sind, die so konzipiert sind und geführt werden, dass einer einen bearbeiteten Teil jedes Werkstücks und der andere einen nicht bearbeiteten Teil jedes Werkstücks ergreift.

9. Transfermaschine gemäß einem beliebigen der vorgenannten Ansprüche, wobei der die Einspannvorrichtungen (16, 16') auf dem Werkstückhalter-Tisch (12) individuell konzipiert sind, um ein Werkstück nach dem anderen an jeder Arbeitsstation aufzunehmen, zu halten und zu bearbeiten.

10. Transfermaschine gemäß den Ansprüchen 1-3, wobei der die Einspannvorrichtungen (16, 16') auf dem Werkstückhalter-Tisch so zueinander liegen, dass sie die Werkstücke paarweise an jeder Arbeitsstation parallel aufnehmen, halten und bearbeiten, wobei die Zuführer an der Ladestation (17) der Werkstücke, die Bearbeitungseinheiten jedes Arbeitsplatzes sowie der Übergabegreifer (19, 20) der Entladegreifer doppelt vorhanden sind.

11. Mehrfaches Bearbeitungsverfahren von Werkstücken in einer Transfermaschine mit einem in Intervallen um eine Achse drehbaren Werkstückhalter-Tisch (12) gemäß einem beliebigen der vorgenannten Ansprüche und mit folgenden Arbeitsschritten:
jedes Ausgangs-Werkstück wird zu den ersten Einspannvorrichtungen (16) an einer ersten Vorderfront (15) des Werkzeughalter-Tisches (12) geführt;
anschließend wird jedes Ausgangs-Werkstück zu mehreren Bearbeitungseinheiten gebracht, um während der ersten Rotation des genannten Werkzeughalter-Tisches (12) die erste Bearbeitung von einem ersten bis zu einem letzten Arbeitsplatz durchzuführen;
in der Folge wird jedes halbbearbeitete Stück aus den Einspannvorrichtungen (16) an der letzten Arbeitsstation der genannten ersten Vorderfront (15) des Werkstückhalter-Tisches (12) entnommen und zu entsprechenden Einspannvorrichtungen (16') an der zweiten Vorderfront (15') des Werkstückhalter-Tisches (12) geführt;
anschließend wird jedes halbbearbeitete Stück zu weiteren Bearbeitungseinheiten gebracht, um während einer zweiten Rotation des genannten Werkstückhalter-Tisches (12) in Entsprechung der ersten Bearbeitungsschritte an den Werkstücken an den ersten Einspannvorrichtungen eine zweite Bearbeitung vorzunehmen;
nach der zweiten Bearbeitung wird das Werkstück abgeladen.

12. Verfahren gemäß Anspruch 11, wobei dem jedes Ausgangs-Werkstück ein vorgeschnittenes und vorgeformtes Element ist.

13. Verfahren gemäß Anspruch 11, wobei dem jedes Werkstück aus einem durch einen Zuführer direkt in der Maschine von einer durchgehenden Stange zugeschnittenen Stück besteht.

## Revendications

1. Machine de transfert comprenant un bâti de support (11), une table porte-pièces (12) supportée par ledit bâti (11) et susceptible de rotations par intermittence autour d'un axe (14), une multiplicité de postes de travail fixes (1-8) associés à la table porte-pièces (12) et pourvue chacune d'au moins une unité de travail (13, 13'), et une pluralité de moyens de serrage (16, 16') à bord de la table porte-pièces (12) pour retenir et ensuite déplacer l'une après l'autre chaque pièce à usiner sur chaque poste de travail après la rotation par intermittence de la table porte-pièces (12) depuis un poste de chargement (17) des pièces de départ jusqu'à un poste de déchargement des pièces finies, **caractérisé en ce que** ladite table porte-pièces (12) a une première face frontale (15) et une seconde face frontale (15') orthogonales à l'axe de rotation et tournées dans des directions opposées, **en ce que** ladite première face frontale (15) de la table porte-pièces est équipée par un premier ordre de moyens de serrage (16) des pièces tournées vers premières unités de travail (13) pour des premiers usinages à effectuer sur chaque pièce et que la dite seconde face frontale (15') de la table porte-pièces est équipée par un second ordre de moyens de serrage (16') des pièces tournées vers secondes unités de travail (13') pour des seconds usinages à effectuer sur chaque pièce, et **en ce que** dans un des dits postes de travail, au moins un dispositif de manipulation (19) est prévu pour prendre et déplacer chaque pièce d'au moins un moyen de serrage (16) sur la première face frontale (15) à au moins un moyen de serrage (16') sur la seconde face frontale (15') de la table porte-pièces.

2. Machine de transfert selon la revendication 1, dans laquelle les moyens de serrage (16, 16') sur lesdites faces frontales opposées sont parallèles à l'axe de rotation de la table porte-pièces (12), avec les moyens de serrage (16) sur une face frontale orientés dans la direction opposée de ceux (16') se trouvant sur l'autre face frontale.

3. Machine de transfert selon les revendications 1 et 2, dans laquelle les moyens de serrage (16) sur une face frontale (15) sont coaxiales aux moyens de serrage (16') sur l'autre face frontale (15') de la table porte-pièces (12), les moyens de serrage pouvant se présenter sous forme de pinces ou d'étaux actionnés hydrauliquement.

4. Machine de transfert selon les revendications 1 et 2, dans laquelle les moyens de serrage (16) sur une face frontale sont décalés par rapport aux moyens de serrage (16') sur l'autre face frontale de la table porte-pièces (12), les moyens de serrage pouvant se présenter sous forme de pinces ou d'étaux actionnés hydrauliquement.

5. Machine de transfert selon l'une des revendications précédentes, où les pièces à usiner sont découpées dans, une barre continue, dans laquelle le poste de chargement (17) des pièces de départ est située du côté de la première face frontale (15) de la table porte-pièces et coïncide avec un premier poste de travail, et dans laquelle, en association avec ledit poste de chargement (17) est prévu un système d'alimentation pour un avancement intermittent d'une barre continue et avec une cisaille pour découper la barre continue en morceaux.

6. Machine de transfert selon l'une des revendications précédentes, dans laquelle les moyens de serrage (16) de la première face frontale de la table porte-pièces (12) sont prévus pour recevoir et bloquer une partie de chaque pièce de départ au cours des premiers usinages de la partie restante de cette pièce, et les moyens de serrage (16') de la seconde face frontale de la table porte-pièces (12) sont prévus pour recevoir et bloquer une partie déjà usinée de chaque pièce afin d'usiner la partie qui n'a pas encore été usinée.

7. Machine de transfert selon l'une des revendications précédentes, dans laquelle au moins un des manipulateurs de transfert (19, 20) est prévu et géré, pour prendre une partie usinée de chaque pièce.

8. Machine de transfert selon l'une des revendications précédentes, dans laquelle deux manipulateurs de transfert opposés (19, 20) sont prévus et gérés, l'un pour prendre une partie usinée de chaque pièce, et l'autre pour prendre une partie non usinée de chaque pièce.

9. Machine de transfert selon l'une des revendications précédentes, dans laquelle les moyens de serrage (16, 16') sur la table porte-pièces (12) sont prévus individuellement pour recevoir, déplacer et usiner une seule pièce à la fois en chaque poste de travail.

10. Machines de transfert selon les revendications 1-3, dans laquelle les moyens de serrage (16, 16') sur la table porte-pièces (12) sont appariés afin de recevoir, déplacer et usiner des couples de pièces parallèlement en chaque poste de travail, et dans laquelle les systèmes d'alimentation du poste de chargement (17) des pièces, les unités de travail de chaque poste de travail, le manipulateur de transfert (19, 20) des manipulateurs de déchargement sont tous doubles.

11. Procédé pour usinages multiples de pièces dans une machine de transfert munie d'une table porte-pièces (12) tournant par intermittence autour d'un axe, selon l'une des revendications précédentes, comprenant les phases de:
placer chaque pièce de départ dans premiers moyens de serrage (16) situés sur une première face frontale (15) de la table porte-pièces (12),
porter l'une après l'autre chaque pièce de départ en ligne avec plusieurs unités de travail pour effectuer des premiers usinages en partant d'un premier poste de travail pour arriver à un dernier poste de travail durant une première rotation de ladite table porte-pièces (12);
libérer et déplacer mécaniquement l'une après l'autre chaque pièce semi-finie des moyens de serrage (16) sur ladite première face frontale (15) de la table porte-pièces (12) dudit dernier poste de travail à des moyens de serrage correspondants (16') sur une deuxième face frontale (15') de la table porte-pièces (12),
porter ensuite l'une après l'autre chaque pièce semi-finie en ligne avec autres unités de travail pour effectuer de seconds usinages au cours d'une seconde rotation de ladite table porte-pièces (12) en concomitance avec les premiers usinages effectués sur les pièces dans les premiers moyens de serrage,
décharger la pièce après les seconds usinages.

12. Procédé selon la revendication 11, dans le quelle chaque pièce de départ est un élément prédécoupé ou préformé.

13. Procédé selon la revendication 11, dans le quelle chaque pièce est constituée d'un morceau découpé dans une barre continue directement dans la machine face à un système d'alimentation.
